(19) Europäisches Patentamt

European Patent Office

Office européen des brevets

(11) **EP 1 031 247 B1**

(12) **EUROPEAN PATENT SPECIFICATION**

(45) Date of publication and mention
of the grant of the patent:
**02.04.2003 Bulletin 2003/14**

(51) Int Cl.7: **H04Q 7/30**

(86) International application number:
**PCT/US98/24370**

(21) Application number: **98959453.6**

(22) Date of filing: **13.11.1998**

(87) International publication number:
**WO 99/026437 (27.05.1999 Gazette 1999/21)**

(54) **FLEXIBLE FREQUENCY-TIME DIVISION DUPLEX IN RADIO COMMUNICATIONS SYSTEMS**

FLEXIBLES FREQUENZ-ZEITDUPLEX IN FUNKÜBERTRAGUNGSSYSTEMEN

DUPLEX SOUPLE A REPARTITION EN FREQUENCE ET DANS LE TEMPS DANS DES SYSTEMES DE RADIOCOMMUNICATIONS

(84) Designated Contracting States:
**AT BE CH CY DE DK ES FI FR GB GR IE IT LI LU MC NL PT SE**

(30) Priority: **14.11.1997 US 65797 P**
**12.11.1998 US 189808**

(43) Date of publication of application:
**30.08.2000 Bulletin 2000/35**

(73) Proprietor: **Ericsson Inc.**
**Research Triangle Park, N.C. 27709 (US)**

(72) Inventors:
• **LENZO, Michael**
**Apex, NC 27502 (US)**

• **SHEN, Qun**
**3119, San Diego, CA 92130 (US)**

(74) Representative: **Wennerholm, Kristian et al**
**Ericsson Radio Systems AB,**
**Patent Unit Radio Access**
**164 80 Stockholm (SE)**

(56) References cited:
| | |
|---|---|
| **US-A- 5 444 696** | **US-A- 5 475 677** |
| **US-A- 5 602 836** | **US-A- 5 617 412** |
| **US-A- 5 689 502** | |

## Description

### Field of the Invention

The present invention relates to radio communications systems, and more particularly to duplex schemes in time-division multiple-access (TDMA) systems.

### Background of the Invention

Most time-division multiple-access wireless communications systems employ either a time-division duplex (TDD) scheme or a frequency-division duplex (FDD) scheme to separate uplink and downlink transmissions. Since both duplex schemes provide certain advantages and disadvantages, both schemes are routinely utilized in wireless communications applications.

For example, in the Personal Wireless Telecommunication (PWT) standard, time-division multiple-access with time-division duplex is used for frequency planning as well as signal packet and time slot assignment. Such a time-division multiple-access / time-division duplex scheme is well suited for many business wireless communication applications (e.g., small-campus systems with micro or pico cells). In addition, U.S. Patent No. 5,475,677 discloses a portable handset compatible for operation in both a FFD mode for communications in the licensed portion of the frequency band, and in a TDD mode for communication in the unlicenced portion of the frequency band.

On the other hand, time-division multiple-access with either time-division duplex or frequency-division duplex can be preferable for licensed Personal Communication Service (PCS) frequency bands, depending upon customer demands and marketplace requirements. In other words, since the structure of a Personal Communications Service system is primarily determined by a service provider having acquired a portion of the frequency spectrum, the technology and frequency usage implemented in such a system is ultimately driven by customer demand as well as legal and practical constraints. While a first customer may request a time-division multiple access / time-division duplex system for a particular business wireless application, a second customer may thereafter demand a time-division multiple access / frequency-division duplex system for a wireless local loop application.

Thus, service providers are often required to convert between duplex schemes. Converting between schemes, however, typically results in duplicated effort and therefore wastes significant time and resources. For example, since the conventional time-division duplex and frequency-division duplex schemes are fundamentally different, it generally is not feasible to use a common hardware platform for both types of system. As a result, two development teams are typically assigned, and two separate product lines are usually established, to provide for both time-division duplex and frequency-division duplex implementations.

Thus, there is a need for a flexible duplex scheme which will allow a communications system to be adapted to satisfy varying customer needs without requiring modification of basic system hardware architecture.

### Summary of the Invention

The invention is as set out in independent claims 1 and 19, prefered forms being set out in the dependent claims.

The present invention fulfills the above-described and other needs by providing a flexible division duplex mechanism in a time-division multiple-access communications system. More specifically, the disclosed system utilizes a mixed, or hybrid, division duplex mechanism such that uplink and downlink transmissions are separated in frequency while time slots associated with transmission and reception are also separated in time. The hybrid duplex scheme, referred to herein as frequency-time division duplex (FTDD), allows alternative division duplex mechanisms to be selectively implemented within a communications system without requiring modification of the basic system hardware architecture.

The frequency-time division duplex system of the present invention provides the advantages of low power consumption and reduced hardware complexity normally associated with conventional time-division multiple-access / time-division duplex systems, while also providing improved interference characteristics by separating uplink and downlink frequency bands. Further, the proposed system allows a single hardware platform to be used for multiple technologies and applications. For example, base stations designed for a business wireless system based on time-division multiple-access / time-division duplex technology can also be used, with minor changes, for wireless local loop (WLL) applications conventionally based on time-division multiple-access / frequency-division duplex technology. Thus, embodiments of the invention allow the non-recurring engineering costs typically associated with technology and product development to be substantially reduced. As a result, development schedules and production cycles for implemented systems can be shortened, and service and product providers can respond more quickly to customer and market demand.

According to an exemplary embodiment, a base station includes a transceiver configured to transmit downlink communications signals to mobile stations via a first carrier frequency and to receive uplink communications signals from the mobile stations via a second carrier frequency, the downlink and uplink communications signals being transmitted and received via successive time division multiple access frames, each frame including a plurality of time slots. For each active communications link between the station and a particular mobile station, a first time slot in each frame is allocated for downlink communication to the particular mobile station and a second time slot in each frame is allocated for uplink communication from the particular mobile station, the first and second allocated time slots being separated in time by a fixed time offset. Advantageously, a duration of the fixed time offset can be different for each active communication link (e.g., for each call established). For example, where each frame is of duration T and includes 2N time slots, each time slot being of duration T/2N, the fixed time offset for each active communication link can be $\Delta T = (T/2N)*m$, where m is an integer in the range from 1 to 2N-1.

According to an alternative embodiment, a base station includes a transceiver configured to transmit downlink communications signals to mobile stations via a first carrier frequency and to receive uplink communications signals from the mobile stations via a second carrier frequency, the downlink and uplink communications signals being transmitted and received via successive time division multiple access frames, each frame including a plurality of time slots. Advantageously, a downlink signal processing path and an uplink signal processing path of the transceiver share common signal processing components. For example, the shared signal processing components can include one or more of a filter, a local oscillator and a modem.

The above described and additional features of the present invention are explained in greater detail hereinafter with reference to the illustrative examples shown in the accompanying drawings. Those skilled in the art will appreciate that the described embodiments are provided for purposes of illustration and understanding and that all equivalent embodiments are contemplated herein.

## Brief Description of the Drawings

Figure 1 depicts an exemplary wireless communications system in which the teachings of the present invention can be implemented.

Figure 2A depicts a base station and a mobile station communicating in accordance with a conventional time-division multiple-access / time-division duplex scheme.

Figure 2B depicts an exemplary time slot arrangement in a conventional time-division multiple-access / time-division duplex system.

Figure 3A depicts a base station and a mobile station communicating in accordance with a conventional time-division multiple-access / frequency-division duplex scheme.

Figure 3B depicts an exemplary time slot arrangement in a conventional time-division multiple-access / frequency-division duplex system.

Figure 4A depicts a base station and a mobile station communicating in accordance with a flexible time-division multiple-access / frequency-time division duplex scheme according to the present invention.

Figure 4B depicts an exemplary time slot arrangement in a flexible time-division multiple-access / frequency-time division duplex system according to the invention.

Figure 4C depicts an alternative time slot arrangement in a flexible time-division multiple access / frequency-time division duplex system according to the invention.

Figure 5 is a block diagram of an exemplary transceiver constructed in accordance with the present invention.

## Detailed Description of the Invention

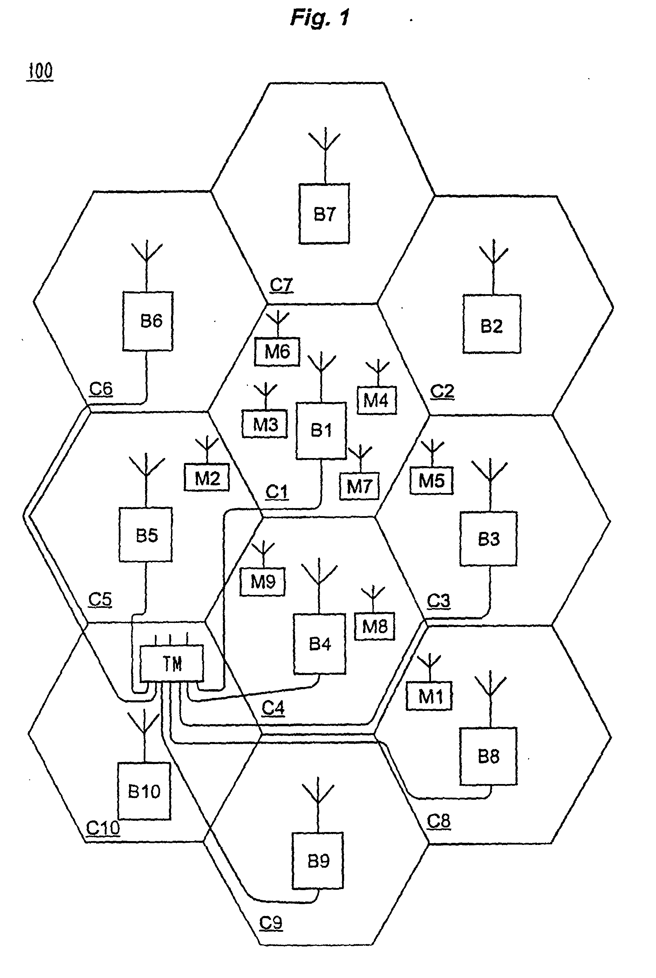

Figure 1 depicts a wireless communications system 100 in which the teachings of the present invention can be implemented. As shown, the exemplary wireless system includes ten cells or coverage areas C1-C10, ten base stations B1-B10, a timing master TM and ten mobile stations M1-M10. Such a wireless system can be constructed, for example, in accordance with the Personal Wireless Telecommunication (PWT) standard, and can therefore be used, for example, to provide mobile communications within a building or throughout a campus including many buildings and open areas. Generally, a wireless system can include far more than ten cells, ten base stations and ten mobile stations; however, ten of each is sufficient for illustrative purposes.

As shown, one or more base stations can be situated in each of the cells. Although Figure 1 shows the base stations located toward the cell centers, each base station can instead be located anywhere within a cell. Base stations located toward a cell center typically employ omni-directional antennas, while base stations located toward a cell boundary typically employ directional antennas. The timing master TM, or radio exchange, maintains timing synchronization between the base stations as is known in the art. The timing master can be connected to the base stations by cable, radio links, or both.

Each base station and each mobile station includes a transceiver for transmitting and receiving communications signals over the air interface. Typically, the base and mobile stations communicate using a form of time, frequency or code division multiple access (i.e., TDMA, FDMA or CDMA) as is known in the art. As the mobile stations move within a cell and from cell to cell, communication with at least one base station is always possible. As a result, mobile station users are able to place, receive and conduct calls anywhere within the overall system coverage area.

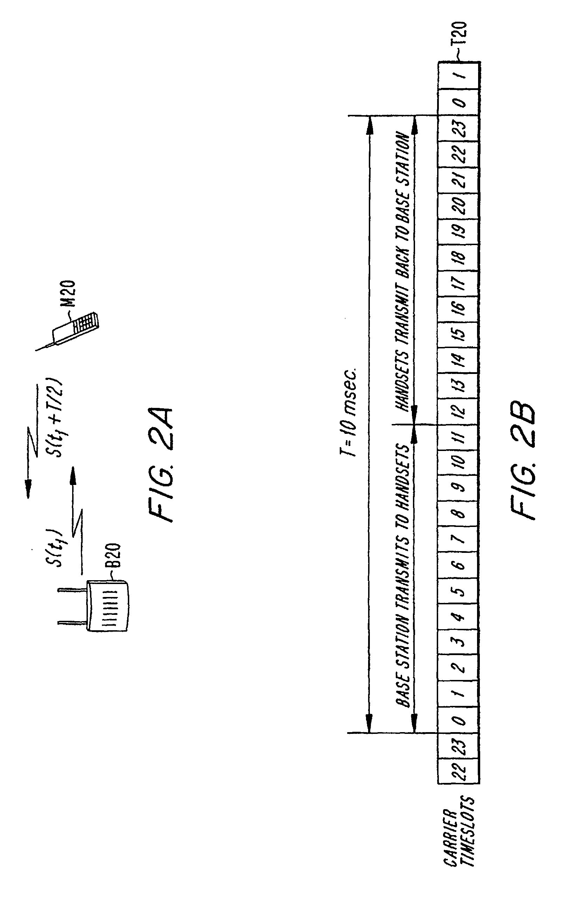

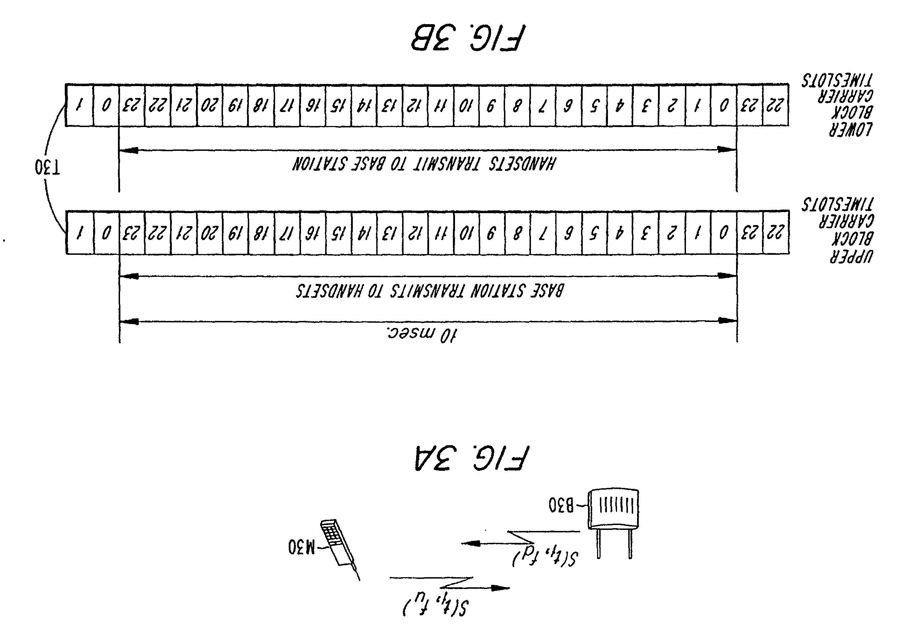

To illuminate the features and advantages of the hybrid, frequency-time division duplex (FTDD) scheme of the present invention, conventional time-division duplex (TDD) and frequency-division duplex (FDD) schemes are described hereafter with respect to Figures 2A, 2B, 3A and 3B. Without loss of generality, the channel definition in the Personal Wireless Telecommunication standard is used to illustrate a conventional time-division multiple-access (TDMA) / TDD system. Although channel definitions can differ between standards, the underlying multiplexing and duplexing concepts remain the same.

Figure 2A depicts uplink and downlink communication according to a conventional TDD scheme. As shown, signals transmitted from a TDD base station B20 to a TDD handset M20, and those transmitted from the TDD handset M20 to the TDD base station B20, are separated in time. If, as shown in Figure 2B, a predetermined time interval T represents the duration of a single TDMA /TDD frame T20, then the separation between uplink and downlink transmissions is typically one half of the predetermined time interval T, or T/2. In a Personal Wireless Telecommunications system, each frame is 10 milliseconds in duration and includes twenty-four data slots. Within a data frame, twelve time slots are used for transmission (from the TDD base station B20 to the TDD handset M20), and the remaining twelve time slots are used for reception (i.e., transmission from the TDD handset M20 to the TDD base station B20). Though transmissions and receptions are separated by certain fixed (or variable) time, they share a common frequency band. The channel of such a system is therefore defined by a predetermined frequency and time reference pair.

Such TDMA / TDD systems are widely adopted in various wireless communications applications. An advantage of these systems is that of frequency efficiency, as both uplink and downlink transmissions use a common frequency carrier. Additionally, since transmissions and receptions are separated in time, a single hardware path (including filters, local oscillators, etc.) can be used for both functions. As a result, TDD systems are relatively low cost. Also, since receiving hardware can be turned off during transmission (and transmitting hardware can be turned off during reception), TDD systems consume relatively little power.

By way of contrast, frequency-division duplex (FDD) systems require separate frequency bands for uplink and downlink communications. This results from the fact that the receive and transmit operations are executed simultaneously in time at different frequencies. A channel in a FDD system is thus defined by the frequency of operation. Figure 3A depicts uplink and downlink communications between a conventional FDD base station B30 and a conventional FDD handset M30, and Figure 3B shows an exemplary TDMA / FDD frame T30. Since both transmit and receive are accomplished simultaneously, separate hardware paths are required in both base stations and terminals. As a result, FDD systems are typically higher cost and consume more power as compared to conventional TDD systems. However, FDD systems provide relatively little cross-channel interference and are sometimes preferred from an inter-system perspective. In other words, a FDD scheme may be required to make a system compatible with proximate systems using an adjacent portion of the frequency spectrum. As a result, FDD systems have also been widely adopted in wireless communications applications.

Though both TDD and FDD systems do provide certain advantages, neither is ideally suited for all wireless communications applications. Further, as described above, the fundamental differences between TDD and FDD make it difficult to adapt a system configured specifically for one or the other to conform with a particular application need. Advantageously, the present invention provides a hybrid, frequency-time division duplex (FTDD) scheme which provides certain of the advantages of both types of conventional system and which further allows a single hardware configuration to be readily adapted to suit virtually any wireless communications application.

To illustrate the FTDD system of the present invention, a TDMA data frame is defined as including 2N time slots (N an integer) in which N slots are reserved for downlink transmission from a base station to a portable and the remaining N slots are reserved for uplink transmission from a portable to a base station. Assuming, without loss of generality, that the time durations of uplink and downlink slots are u and d, respectively, then the duration T of a single frame is given by:

$$N(d+u) = T. \tag{1}$$

Since transmit and receive time slots are usually of the same time duration (i.e., $d = u$), half of the frame, or T/2, is usually reserved for downlink transmission and the remaining half of the frame is usually reserved for uplink transmission.

According to the invention, a duplex link is set up with both frequency and time separation. Specifically, the uplink frequency $f_u$ is separated from the downlink frequency $f_d$ by a pre-determined frequency offset $\Delta f$ as follows:

$$f_u = f_d - \Delta f \tag{2}$$

or

$$f_u = f_d + \Delta f. \tag{3}$$

Equations (2) and (3) describe the frequency-division duplex aspect of the system. In addition to frequency separation, time separation is also provided. Specifically, the uplink and downlink communications between a base station and a portable are also separated by a fixed time offset. The specific time offset is based on a frame length of 2N slots with a period of T/2N seconds/slot. The time duplexing can then be defined generally for an uplink packet as $S_u(t_1)$ and for a downlink packet as $S_d(t_1 \pm \Delta T)$, where $t_1$ is defined as the start time of the uplink packet and

$$\Delta T = \text{time offset} = (T/2N) * m \qquad (1 \leq m \leq 2N - 1) \tag{4}$$

(m being an integer which, according to the invention, can be different for each communications link established between a base station and a mobile station). The combined time-division and frequency-division aspects of the system can thus be described generally for the uplink packet as $S_u(t_1, f_u)$ and for the downlink packet as $S_d(t_1 + \Delta T, f_u \pm \Delta F)$ or $S_d(t_1 - \Delta T, f_u \pm \Delta F)$.

Thus, according to the invention, uplink and downlink transmissions occur at separate frequencies and on allocated time slot pairs, one time slot pair being allocated for each active link established between a base station and a mobile station. For each active link, the allocated uplink time slot either precedes or follows the corresponding allocated downlink time slot, within each TDMA frame, by the time offset $\Delta T$. The allocated time slot pairing is then maintained for the duration of the link.

Selection of the uplink and downlink time slots for each link can be based, for example, on a channel selection process which determines the best link arrangement. Determination of the best link arrangement can in turn be based, for example, on an assessment of adjacent-channel and/or co-channel interference existing at the time of call setup. Advantageously, either the base station or the mobile station can be responsible for time slot selection and allocation. For example, the base station can select the uplink time slot based on interference conditions at the base station, while the mobile station selects the downlink time slot based on conditions at the mobile. Alternatively, the base station can select both uplink and downlink time slots, either independently or on command from the mobile stations.

Note that, because each base station is not limited to a particular portion of a frame for uplink or downlink transmission, a single base station can be used to support portables throughout a particular coverage area. In other words, since each slot within each TDMA frame can be allocated for either uplink or downlink transmission, and since the time offset between an allocated uplink and downlink time slot pair can be different for each active link, a single base station can communicate with a mobile station using any available time slot arrangement which may be preferable for the mobile. Of course, a single base station can support at most N duplex links simultaneously (assuming 2N time slots per TDMA frame), and if traffic conditions warrant it, a second base station can be added in the coverage area to provide for full time and spectral efficiency (i.e., both base stations together can support 2N simultaneous conversations).

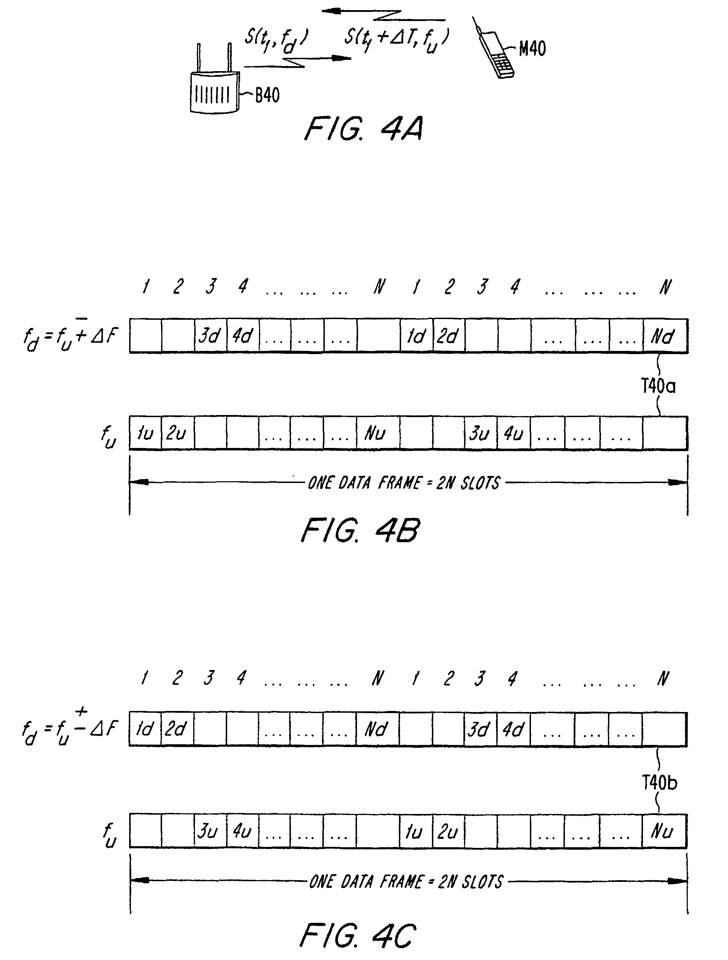

Figure 4A depicts a FTDD base station B40 and a FTDD terminal M40 communicating in accordance with the above described TDMA / FTDD scheme. As shown, uplink and downlink communications are separated in both frequency and time. Figure 4B then depicts an exemplary combination of time slot pairings within a TDMA / FTDD data frame T40a for a single base station. Those skilled in the art will appreciate that the combination of pairings in Figure 4B is but one example and that every possible combination of pairings is contemplated by the invention. Furthermore, although each uplink and downlink pair in Figure 4B utilizes the same time offset (i.e., $\Delta T = T/2$), those skilled in the art will realize that each pair can use a different time offset as described above. However, assuming for purposes of illustration that the depicted time slot pairing is in effect for a first base station, Figure 4C then depicts a complimentary time slot pairing which can be used, for example, by a second co-located base station without causing interference with the first base station. Together, the first and second co-located base stations provide full time and spectral efficiency for the coverage area in which they are situated (i.e., each frequency in each time slot within each TDMA frame is utilized for either uplink or downlink communication).

According to the invention, appropriate base station synchronization is used to enable a handset to conduct communication with any base station in an overall system. As is known in the art, such base station synchronization can be implemented via a timing master TM such as that depicted in Figure 1. In implementations in which the time offset T between paired uplink and downlink time slots is variable across communications links (i.e., where each active communication link can potentially utilize a different time offset), appropriate overhead signaling is required between base stations to implement handovers (e.g., information identifying the presently allocated pair is passed between base stations during a handover). However, in implementations in which each active link utilizes a common time offset $\Delta T$, the overhead can be significantly reduced. See, for example, copending U.S. Patent Application No. 09/189,807, entitled "Fixed Frequency-Time Division Duplex in Radio Communications Systems" filed on even date herewith. Those skilled in the art will appreciate that the above described synchronization can be achieved via straightforward software modification of existing systems.

An exemplary embodiment of the above described TDMA / FTDD system utilizes the U.S. Personal Communication Service band definition for uplink and downlink frequencies combined with the PWT(E) time-division definition. The embodiment utilizes a fixed T = T/2 for all duplex links and operates with the following parameters:

$$T = T/2 = 5 \text{ msec}$$

$$F = 80 \text{ MHz}$$

$$T/2N = 416.667 \text{ } \mu\text{sec}$$

$$S_u (t_1, f_u)$$

$$S_d (t_1 \text{ Å } 5 \text{ msec}, f_u + 80 \text{ MHz}).$$

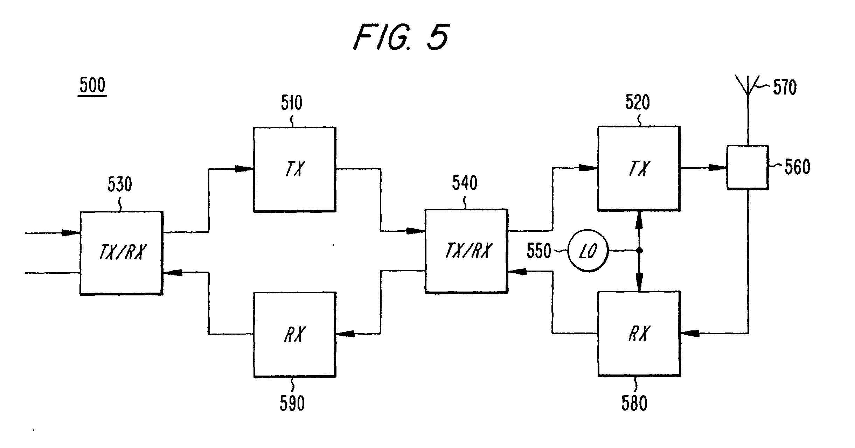

As noted above, the TDMA / FTDD scheme of the invention provides, among other advantages, the power savings benefits typically associated with conventional TDMA / TDD systems. For example, since uplink and downlink transmissions are separated in time, the disclosed FTDD scheme enables the transmit and receive paths of a base station or mobile station transceiver to share certain components. This aspect of the invention is depicted in Figure 5.

In Figure 5, an exemplary base station transceiver 500 includes a transmit signal processing path and a receive signal processing path. As shown, the transmit processing path includes first and second transmit blocks 510, 520, first and second transmit / receive blocks 530, 540, a local oscillator 550, a duplexor 560 and an antenna 570. Additionally, the receive signal processing path includes the local oscillator 550, the duplexor 560 and the antenna 570, as well as first and second receive blocks 580, 590.

The first transmit block 510 can include, for example, a conventional upconverter, and the second transmit block 520 can include, for example, power amplifiers and mixers. Additionally, the first receive block 580 can include, for example, low noise amplifiers (LNAs) and mixers, and the second receive block 590 can include, for example, a conventional downcoverter and limiter. The first transmit / receive block 530 can include, for example, a modem, and the second transmit / receive block 540 can include, for example, bandpass filters. The duplexor 560 can be, for example, a two-way filter or a switch.

During downlink transmission, the duplexor 560 couples the antenna 570 to the second transmit block 520 and isolates the antenna 570 from the first receive block 580. Baseband transmit signals are processed by the first transmit /receive block 530 and are then upconverted, filtered and amplified in blocks 510, 540, 520, respectively, prior to transmission via the antenna 570. Conversely, during uplink reception, the duplexor 560 couples the antenna 570 to the first receive block 580 and isolates the antenna 570 from the second transmit block 520. Radio frequency signals are received at the antenna 570 and then amplified, filtered and downconverted in blocks 580, 540 and 590, respectively, prior to being processed by the first transmit / receive block 530. Because the transmit and receive processing paths share certain components (i.e., those components in the first and second transmit / receive blocks 530, 540, which are typically very expensive), a base station transceiver constructed in accordance with the invention can be made smaller and less costly as compared to conventional TDMA / FDD transceivers.

In sum, the present invention teaches a time-division multiple-access system including a flexible frequency-time division duplex mechanism. The disclosed system enables existing time-division multiple-access / time-division duplex hardware to be utilized for applications where dual duplex frequency bands are required. The system maintains the flexibility of either using the same frequency band or separate bands for uplink and downlink communication. In each case, time-division duplex capability is maintained such that hardware cost and power consumption is minimized.

Those skilled in the art will appreciate that the present invention is not limited to the specific exemplary embodiments which have been described herein for purposes of illustration. The scope of the invention, therefore, is defined by the claims which are appended hereto, rather than the foregoing description, and all equivalents which are consistent with the meaning of the claims are intended to be embraced therein.

**Claims**

1.  A base station (B40) for use in a wireless communications system including a plurality of mobile stations (M40), said base station comprising:

    a transceiver (500) configured to transmit downlink communications signals to said mobile stations (M40) via a first carrier frequency ($f_d$) and to receive uplink communications signals from said mobile stations via a second carrier frequency ($f_u$), the downlink and uplink communications signals being transmitted and received via successive time division multiple access frames, each frame including a plurality of time slots (1, 2...2N), wherein, for each active communications link between said base station (B40) and a particular mobile station (M40), a first time slot (1d) in each frame is allocated for downlink communication to the particular mobile station (M40) and a second time slot (1u) in each frame is allocated for uplink communication from the particular mobile station (M40), the first and second allocated time slots (1d, 1u) being separated in time by a fixed time offset, **characterized in that**
    the base station comprises means to supply a different duration of the fixed time offset for each active communications link.

2.  A base station according to claim 1, wherein each time slot (1, 2, ...2N) in the time division multiple access frames can be allocated for either one of downlink and uplink communication.

3.  A base station according to claim 1, wherein said base station (M40) is configured to select, for each active communication link, the time slot (1, 2, ...N) which is allocated for uplink communications.

4.  A base station according to claim 1, wherein said base station (M40) is configured to select, for each active communication link, the time slots (1, 2, ...2N) which are allocated for uplink and downlink communications.

5.  A base station according to claim 1, wherein, for each active communication link, said base station (B40) is configured to select, on command from a mobile station (M40), the time slots (1, 2, ... 2N) which are allocated for uplink and downlink communications.

6.  A base station according to claim 1, wherein each frame is of a duration T and includes an integer number, 2N, of time slots, each time slot being of a duration T/2N, and wherein the fixed time offset for each active communication link is given by $\Delta T = (T/2N)*m$, m being an integer in a range from 1 to 2N-1.

7.  A base station according to claim 1, wherein a downlink signal processing path and an uplink signal processing path of said transceiver share common signal processing components.

8.  A base station according to claim 7, wherein said shared signal processing components include at least one of a filter, a local oscillator and a modem.

9.  A base station according to claim 8, wherein each time slot (1, 2, ...N) in the time division multiple access frames can be allocated for either one of downlink and uplink communication.

10. A base station according to claim 9, wherein each frame is of a duration T and includes a number, 2N, of time slots, each time slot being of a duration T/2N, and wherein the duration of the fixed time offset for each active communications link is given by $\Delta T = (T/2N)*m$, N and m being integers and m being in a range from 1 to 2N-1.

11. A wireless communications system, comprising:

    a plurality of mobile stations (M40); and
    at least one base station (B40) according to claim 1.

12. A communications system according to claim 11, wherein each time slot (1, 2, ...2N) in a time division multiple access frame can be allocated for either one of downlink and uplink communication.

13. A communications system according to claim 11, wherein base stations (B40) are configured to select, for each active communication link with a mobile station (M40), the time slots (1, 2, ... 2N) which are allocated for downlink and uplink communications.

14. A communications system according to claim 11, wherein mobile stations (M40) are configured to select the time slots (1, 2, ... N) which allocated for downlink and uplink communications.

15. A communications system according to claim 11, wherein mobile stations (M40) are configured to select the time slots (1, 2, ... N) allocated for downlink communication and base stations (B40) are configured to select the time slots (1, 2, ... N) allocated for uplink communication.

16. A communications system according to claim 11, wherein each time division multiple access frame is of a duration T and includes an integer number, 2N, of time slots, each time slot being of a duration T/2N, and wherein the fixed time offset for each active communication link between a base station and a mobile station is given by $\Delta T = (T/2N)*m$, m being an integer in a range from 1 to 2N-1.

17. A communications system according to claim 11, wherein two base stations are co-located to provide complete time and spectral coverage for a particular system coverage area.

18. A method for conducting communications between a base station and mobile stations in a wireless communications system, comprising the steps of:

transmitting downlink and uplink communications signals between the base station and the mobile stations using successive time division multiple access frames, each frame including a plurality of time slots (1, 2, ... 2N), wherein the downlink communications signals are transmitted from the base stations (B40) to the mobile stations (M40) using a first carrier frequency ($f_d$) and the uplink communications signals are transmitted from the mobile stations to the base station using a second carrier frequency ($f_u$);

for each active communications link between the base station (B40) and a particular mobile station (M40), selecting a duration of a fixed time offset between a first and a second time slots used for downlink and uplink communication respectively to the particular mobile station,

allocating the first time slot (1d) and the second time slot (1u) in each frame for the respective downlink and uplink communication according to the selected time offset, **characterized in that** a duration of the fixed time offset the different for each active communications link.

### Revendications

1. Station de base (B40) destinée à être utilisée dans un système de communications sans fil comprenant plusieurs stations mobiles (M40), ladite station de base comportant :

un émetteur-récepteur (500) configuré pour transmettre des signaux de communications de liaison descendante auxdites stations mobiles (M40) par l'intermédiaire d'une première fréquence porteuse $f_d$ et à recevoir des signaux de communications de liaison montante provenant desdites stations mobiles par l'intermédiaire d'une seconde fréquence porteuse ($F_u$), les signaux des communications de liaisons montante et descendante étant émis et reçus par l'intermédiaire de trames successives à accès multiples par répartition dans le temps, chaque trame comprenant plusieurs créneaux temporels (1, 2,...2N), dans laquelle, pour chaque liaison active de communications entre ladite station de base (B40) et une station mobile particulière (M40), un premier créneau temporel (1d) dans chaque trame est affecté à une communication de liaison descendante vers la station mobile particulière (M40) et un second créneau temporel (1u) dans chaque trame est affecté à une communication de liaison montante à partir de la station mobile particulière (M40), les premier et second créneaux temporels affectés (1d, 1u) étant séparés dans le temps par un décalage de temps fixe, **caractérisée en ce que**

la ligne de la station de base comporte des moyens destinés à fournir une durée différente du décalage de temps fixe pour chaque liaison active de communications.

2. Station de base selon la revendication 1, dans laquelle chaque créneau temporel (1, 2,...2N) dans les trames à accès multiples par répartition dans le temps peut être affecté à l'une ou l'autre des communications de liaison descendante et de liaison montante.

3. Station de base selon la revendication 1, dans laquelle ladite station de base (M40) est configurée de façon à sélectionner, pour chaque liaison active de communications, le créneau temporel (1, 2, ...N) qui est affecté à des communications de liaison montante.

4. Station de base selon la revendication 1, dans laquelle ladite station de base (M40) est configurée pour sélectionner, pour chaque liaison active de communication, les créneaux temporels (1, 2,...2N) qui sont affectés à des communications de liaisons montante et descendante.

5. Station de base selon la revendication 1, dans laquelle, pour chaque liaison active de communication, ladite station de base (B40) est configurée de façon à sélectionner, sur un ordre provenant d'une station mobile (M40), les créneaux temporels (1, 2,...2N) qui sont affectés à des communications de liaisons montante et descendante.

6. Station de base selon la revendication 1, dans laquelle chaque trame est d'une durée T et comprend un nombre entier, 2N, de créneaux temporels, chaque créneau temporel étant d'une durée T/2N, et dans laquelle le décalage de temps fixe pour chaque liaison active de communications est donné par $\Delta T = (T/2N)*m$, m étant un entier dans une plage de 1 à 2N-1.

7. Station de base selon la revendication 1, dans laquelle un chemin de traitement de signaux de liaison descendante et un chemin de traitement de signaux de liaison montante dudit émetteur-récepteur se partagent des composants de traitement de signaux communs.

8. Station de base selon la revendication 7, dans laquelle lesdits composants partagés de traitement de signaux comprennent au moins l'un d'un filtre, d'un oscillateur local et d'un modem.

9. Station de base selon la revendication 8, dans laquelle chaque créneau temporel (1, 2, ...N) dans les trames à accès multiples par répartition dans le temps peut être affecté à l'une ou l'autre de communications de liaisons descendante ou montante.

10. Station de base selon la revendication 9, dans laquelle chaque trame est d'une durée T et comprend un nombre, 2N, de créneaux temporels, chaque créneau temporel étant d'une durée T/2N et dans laquelle la durée du décalage de temps fixe pour chaque liaison active de communications est donnée par $\Delta T = (T/2N)*m$, n et m étant des entiers et m étant dans une plage de 1 à 2N-1.

11. Système de communications sans fil, comportant :

    plusieurs stations mobiles (M40) ; et
    au moins une station de base (B40) selon la revendication 1.

12. Système de communications selon la revendication 11, dans lequel chaque créneau temporel (1,2,...2N) dans une trame à accès multiples par répartition dans le temps peut être affecté à l'une ou l'autre de communications de liaisons descendante et montante.

13. Système de communications selon la revendication 11, dans lequel des stations de base (B40) sont configurées pour sélectionner, pour chaque liaison active de communications avec une station mobile (M40), les créneaux temporels (1, 2,...2N) qui sont affectés à des communications de liaisons descendante et montante.

14. Système de communication selon la revendication 11, dans lequel des stations mobiles (M40) sont configurées pour sélectionner les créneaux temporels (1, 2,...N) qui sont affectés à des communications de liaisons descendante et montante.

15. Système de communication selon la revendication 11, dans lequel des stations mobiles (M40) sont configurées pour sélectionner les créneaux temporels(1, 2,...N)affectés à une communication de liaison descendante et des stations de base (B40) sont configurées pour sélectionner les créneaux temporels(1, 2,...2N)affectés à une communication de liaison montante.

**16.** Système de communication selon la revendication 11, dans lequel chaque trame à accès multiples par répartition dans le temps est d'une durée T et comprend un nombre entier, 2N, de créneaux temporels, chaque créneau temporel étant d'une durée T/2N et dans lequel le décalage de temps fixe pour chaque liaison active de communications entre une station de base et une station mobile est donné par $\Delta T = (T/2N){*}m$, m étant un entier dans une plage de 1 à 2N-1.

**17.** Système de communication selon la revendication 11, dans lequel deux stations de base sont placées ensemble pour assurer une couverture temporelle et spectrale complète pour une zone de couverture d'un système particulier.

**18.** Procédé pour exécuter des communications entre une station de base et des stations mobiles dans un système de communications sans fil comprenant les étapes dans lesquelles :

des signaux de communications de liaisons descendante et montante sont transmis entre la station de base et les stations mobiles en utilisant des trames successives à accès multiples par répartition dans le temps, chaque trame comprenant plusieurs créneaux temporels (1, 2,...2N), les signaux de communications de liaison descendante étant transmis des stations de base (B40) aux stations mobiles (M40) en utilisant une première fréquence porteuse ($f_d$) et les signaux de communications de liaison montante étant transmis des stations mobiles à la station de base en utilisant une seconde fréquence porteuse ($f_u$) ;
pour chaque liaison active de communications entre la station de base (B40) et une station mobile particulière (M40),
on sélectionne une durée d'un décalage de temps fixe entre des premier et second créneaux temporels utilisés pour des communications de liaisons descendante et montante, respectivement, avec la station mobile particulière,
on affecte le premier créneau temporel (1d) et le second créneau temporel (1u) dans chaque trame pour les communications respectives de liaisons descendante et montante conformément au décalage de temps sélectionné, **caractérisé en ce qu'**une durée du premier décalage de temps fixe est différente pour chaque liaison active de communications.

**Patentansprüche**

**1.** Basisstation (B40) zur Verwendung in einem drahtlosen Kommunikationssystem mit einer Mehrzahl von Mobilstationen, wobei die Basisstation umfaßt:

einen Transceiver (500), der konfiguriert ist, Abwärtsverbindungs-Kommunikationssignale an die Mobilstationen (M40) über eine erste Trägerfrequenz ($f_d$) zu senden und Aufwärtsverbindungs-Kommunikationssignale von den Mobilstationen über eine zweite Trägerfrequenz ($f_u$) zu empfangen, wobei die Abwärtsverbindungs- und Aufwärtsverbindungs-Kommunikationssignale über aufeinanderfolgende Zeitteilungs-Mehrfachzugriff-Rahmen gesendet und empfangen werden, von denen jeder Rahmen eine Mehrzahl von Zeitschlitzen (1,2... 2N) einschließt, worin für jede aktive Kommunikationsverbindung zwischen der Basisstation (B40) und einer bestimmten Mobilstation (M40) ein erster Zeitschlitz (1d) in jedem Rahmen für Abwärtsverbindungs-Kommunikation an die bestimmte Mobilstation zugeteilt ist und ein zweiter Zeitschlitz (1u) in jedem Rahmen für Aufwärtsverbindungs-Kommunikation von der bestimmten Mobilstation (M40) zugeteilt ist, wobei die ersten und zweiten zugeteilten Zeitschlitze (ld, lu) zeitlich getrennt sind durch einen festen Zeitversatz, **dadurch gekennzeichnet, dass**
die Basisstation Einrichtungen zum Liefern einer unterschiedlichen Dauer des festen Zeitversatzes für jede aktive Kommunikationsverbindung umfaßt.

**2.** Basisstation nach Anspruch 1, **dadurch gekennzeichnet, daß** jeder Zeitschlitz (1, 2, ...2N) in den Zeitteilungs-Mehrfachzugriff-Rahmen für Abwärtsverbindungs- wie auch für Aufwärtsverbindungs-Kommunikation zugeteilt werden kann.

**3.** Basisstation nach Anspruch 1, **dadurch gekennzeichnet, daß** die Basisstation (B40) konfiguriert ist, für jede aktive Kommunikationsverbindung den Zeitschlitz (1, 2, ...N) auszuwählen, der für die Aufwärtsverbindungs-Kommunikation zugeteilt ist.

**4.** Basisstation nach Anspruch 1, **dadurch gekennzeichnet, daß** die Basisstation (B40) konfiguriert ist, für jede aktive Kommunikationsverbindung die Zeitschlitze (1, 2, ...2N) auszuwählen, die für die Abwärtsverbindungs-Kommunikation zugeteilt sind.

5. Basisstation nach Anspruch 1, **dadurch gekennzeichnet, daß** für jede aktive Kommunikationsverbindung die Basisstation (B40) konfiguriert ist, auf Befehl von einer Mobilstation (M40) die Zeitschlitze auszuwählen, die für Aufwärtsverbindungs- und Abwärtsverbindungskommunikation zugeteilt sind.

6. Basisstation nach Anspruch 1, **dadurch gekennzeichnet, daß** jeder Rahmen die Dauer T hat, und eine ganze Zahl 2N von Zeitschlitzen umfaßt, von denen jeder die Dauer T/2N hat und der feste Zeitversatz für jede aktive Kommunikationsverbindung durch $\Delta T = (T/2N)*m$ gegeben ist, wobei m eine ganze Zahl im Bereich von 1 bis 2N-1 ist.

7. Basisstation nach Anspruch 1, **dadurch gekennzeichnet, daß** ein Abwärtsverbindungs-Signalverarbeitungspfad und ein Aufwärtsverbindungs-Signalverarbeitungspfad des Transceivers sich gemeinsame Signalverarbeitungskomponenten teilen.

8. Basisstation nach Anspruch 7, **dadurch gekennzeichnet, daß** die Signalverarbeitungskomponenten wenigstens einen Filter, einen Oszillator oder ein Modem einschließen.

9. Basisstation nach Anspruch 8, **dadurch gekennzeichnet, daß** jeder Zeitschlitz (1, 2, ...N) in den Zeitteilungs-Mehrfachzugriff-Rahmen für Abwärtsverbindungs- wie auch Aufwärtsverbindungs-Kommunikation zugeteilt werden kann.

10. Basistation nach Anspruch 9, **dadurch gekennzeichnet, daß** jeder Rahmen von einer Dauer T ist, und eine Zahl 2N von Zeitschlitzen umfaßt, wobei jeder Zeitschlitz von der Dauer T/2N ist und die Dauer eines festen Zeitversatzes für jede aktive Kommunikationsverbindung durch $\Delta T = (T/2N)*m$ gegeben ist, wobei m eine ganze Zahl im Bereich von 1 bis 2N-1 ist.

11. Drahtloses Kommunikationssystem mit
    einer Vielzahl von Mobilstationen (M40); und wenigstens einer Basisstation (B40) nach Anspruch 1.

12. Kommunikationssystem nach Anspruch 11, **dadurch gekennzeichnet, daß** jeder Zeitschlitz (1, 2, ...N) in einer Zeitteilungs-Mehrfachzugriff-Rahmen für Abwärtsverbindungs- wie auch Aufwärtsverbindungs-Kommunikation zugeteilt werden kann.

13. Kommunikationssystem nach Anspruch 11, **dadurch gekennzeichnet, daß** Basisstationen (B40) konfiguriert sind, für jede aktive Kommunikationsverbindung mit einer Mobilstation (M40) die Zeitschlitze (1, 2, ...2N) auszuwählen, die für Abwärtsverbindungs- und Aufwärtsverbindungskommunikation zugeteilt sind.

14. Kommunikationssystem nach Anspruch 11, **dadurch gekennzeichnet, daß** Mobilstationen (M40) konfiguriert sind, die Zeitschlitze (1, 2, ...N) auszuwählen, die für Abwärtsverbindungs- und Aufwärtsverbindungs-Kommunikation zugeteilt sind.

15. Kommunikationssystem nach Anspruch 11, **dadurch gekennzeichnet, daß** Mobilstationen (M40) konfiguriert sind, die Zeitschlitze (1, 2, ...N) auszuwählen, die für Abwärtskommunikation zugeteilt sind, und Basisstationen (B40) konfiguriert sind, die Zeitschlitze (1, 2, ...N) auszuwählen, die für Aufwärtsverbindungs-Kommunikation zugeteilt sind.

16. Kommunikationssystem nach Anspruch 11, **dadurch gekennzeichnet, daß** jeder Zeitteilungs-Mehrfachzugriff-Rahmen von der Dauer T ist und eine ganze Zahl 2N von Zeitschlitzen umfaßt, wobei jeder Zeitschlitz von der Dauer T/2N ist, und der feste Zeitversatz für jede aktive Kommunikationsverbindung zwischen einer Basisstation und einer Mobilstation durch $\Delta T = (T/2N)*m$ gegeben ist, wobei m eine ganze Zahl im Bereich von 1 bis 2N-1 ist.

17. Kommunikationssystem nach Anspruch 11, **dadurch gekennzeichnet, daß** zwei Basisstationen benachbart sind, um eine vollständige zeitliche und spektrale Abdeckung und für einen bestimmten Abdeckungsbereich zur Verfügung zu stellen.

18. Verfahren zum Führen von Kommunikationen zwischen einer Basisstation und Mobilstationen in einem drahtlosen Kommunikationssystem, das die Schritte umfaßt:

Übertragen von Abwärts- und Aufwärtsverbindungs-Kommunikationssignalen zwischen der Basisstation und den Mobilstationen unter Verwendung von aufeinanderfolgenden Zeitteilungs-Mehrfachzugriff-Rahmen, wobei jeder Rahmen eine Vielzahl von Zeitschlitzen (1, 2, ...N) umfaßt, worin die Abwärtsverbindungs-Kommunikationssignale von den Basisstationen (B40) an die Mobilstationen (M40) unter Verwendung einer ersten Trägerfrequenz ($f_d$) übertragen werden und die Aufwärtsverbindungs-Kommunikationssignale von den Mobilstationen unter Verwendung einer zweiten Trägerfrequenz ($f_u$) an die Basisstation übertragen werden; für jede aktive Kommunikationsverbindung zwischen der Basisstation (B40) und einer bestimmten Mobilstation (M40),

Auswählen einer Dauer eines festen Zeitversatzes zwischen einem ersten und einem zweiten Zeitschlitz, die für Abwärts- bzw. Aufwärtskommunikation zu der bestimmten Mobilstation benutzt werden,

Zuteilen des ersten Zeitschlitzes (1d) und des zweiten Zeitschlitzes (1u) in jedem Rahmen für die entsprechende Abwärtsverbindungs- und Aufwärtsverbindungs-Kommunikation gemäß dem ausgewählten Zeitversatz, **dadurch gekennzeichnet, daß** eine Dauer des festen Zeitversatzes verschieden ist für jede aktive Kommunikationsverbindung.

**Fig. 1**

$S(t_1)$    $S(t_1 + T/2)$

M20

B20

FIG. 2A

$T = 10$ msec.

BASE STATION TRANSMITS TO HANDSETS    HANDSETS TRANSMIT BACK TO BASE STATION

CARRIER TIMESLOTS | 22 | 23 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 0 | 1 | T20

FIG. 2B

FIG. 3A

FIG. 3B

EP 1 031 247 B1

FIG. 4A

FIG. 4B

FIG. 4C

# FIG. 5

EP 1 031 247 B1